# EUROPEAN PATENT APPLICATION

(11) **EP 3 576 075 A1**
(43) Date of publication of application: **04.12.2019**
(21) Application number: 18175182.7
(22) Date of filing: 30.05.2018
(51) Int. Cl.: G09B 7/04, G09B 5/06, G09B 5/14, G09B 19/00

(54) **OPERATING A TOY FOR SPEECH AND LANGUAGE ASSESSMENT AND THERAPY**

(71) Applicant: University of Malta, Msida MSD 2080 (MT); Flying Squirrel Games Limited, PLA 3000 Paola (MT)
(72) Inventor: FARRUGIA, Philip, Attard, ATD 2031 (MT); GRECH, Helen, Iklin, IKL 1803 (MT); FABRI, Simon, Tal-Pieta', PTA 1227 (MT); GATT, Daniela, Sliema, SLM1755 (MT); CASHA, Owen, Haz-Zebbug, ZBG 2010 (MT); BALZAN, Emanuel, Birzebbuga, BBG 2430 (MT); ATTARD, James, Zurrieq, ZRQ 3480 (MT); DEMANUELE, Anthony, Attard, ATD 2731 (MT); CAMENZULI, Luke, San Gwann, SGN 1912 (MT); BUTTIGIEG, Samuel, Qala, QLA 2015 (MT)
(74) Representative: Grünecker Patent- und Rechtsanwälte PartG mbB

(57) **Abstract**

A toy (100; 220) for children and a method of operating the toy (100; 220) are disclosed. The method comprises operating (410) the toy (100; 220) in a first mode (201) and in a second mode (202). The toy (100; 220), in the first mode (201), autonomously performs the steps of receiving (214; 414) a spoken input from a user (210) at the toy (100; 220) in response to a task being presented to the user (210), evaluating (416) the spoken input with respect to the presented task, and signaling (212; 418) a result at least in part based on the evaluation of the spoken input to the user (210), wherein the signaling the result comprises a movement of one or more mechanical parts of the toy (100; 220). Operating (440) the toy (100; 220) in a second mode (202) comprises establishing (224) a communication channel between the toy (100; 220) and a device (230) of a third party to allow communication between the user (210) of the toy (100; 220) and the third party.

## Description

### FIELD OF THE INVENTION

The present invention relates to a toy and, more specifically, to the operation of a toy for speech and language assessment and therapy.

### BACKGROUND OF THE INVENTION

Toys play an important role in the development of humans in general and particularly for children. Playing with toys is considered important when it comes to growing up and learning about the world around us. In particular, playing with toys can be an enjoyable means to practice social interactions and improve skills of all kinds. Toys can be very simple and can be made from many items. For example, a piece of paper can be transformed into all kind of toys like a ball or a paper plane. Even such low-tech toys can help children, as well as adults, to learn cause-and-effect relationships, to form and strengthen social bonds and to learn languages. Furthermore, toys can be used therapeutically. For example, Speech Language Pathologists (SLPs) use low-tech toys, such as cause-and-effect toys, puzzles, and flashcards to stimulate and improve children's speech and language skills. Their methods rely on creating an interpersonal relationship through the use of such materials, which will then assist SLPs in facilitating children's speech and language development. Studies show that children's language learning relies strongly on the language input received from the people around them. It has been found that 86-98% of the words that children use are also found in their parent's vocabularies (Hart, B., & Risley, T. R. (2003) "The Early Catastrophe"). Therefore, SLPs urge parents to play with their children regularly to model language use in different daily contexts.

Newer forms of toys that are used to support language learning are high-tech toys that may comprise interactive digital entertainment. For example, US 5 562 453 A discloses an adaptive biofeedback speech tutor toy, which is characterized by a programmed sequence of prompts in standard speech evoking a user's voice response to a word or phrase. In particular, the adaptive biofeedback speech tutor toy provides for programmed prompting, converting the human response of the user to a usable form, and selectively providing celebration biofeedback plus a subsequent prompt or corrective biofeedback. However, US 5 562 453 A is limited to audiovisual applause, which merely excites two senses of the user and/or child. Further, an audiovisual feedback may not necessarily be sufficient for a child as motivation to continue playing with the toy. Accordingly, such a toy may become boring. Moreover, the user is left alone with the speech tutor toy. The help that a user of the toy can get in providing feedback on their speech skills is limited by the software of the speech tutor toy and, in the worst case, the speech tutor toy may not recognize specific atypical patterns at all.

Moreover, since the introduction of smartphones and tablets, software developers have created many applications that are useful for learning languages. The use of these apps has also increased among SLPs, because they do not have to carry many toys around with them to sessions. However, these applications are often limited regarding the languages that can be used. For example, no applications integrated with educational toys are available that can cater for the bilingual scenarios. Thus, the "traditional" methods and toys have to be used. Another aspect of tablets is the fact that children disengage from the real world when using tablets and are stuck in repetitive games. Furthermore, a tablet does not look like a toy and thus children cannot express different play behaviors as they do with their favorite toys. Accordingly, tablet applications excite only a few senses of the user and do not provide for any physical interaction.

It is the object of the present invention to provide an improved toy and method of operating a toy for children.

This object is solved by the subject matter of the independent claims.

Embodiments are defined by the dependent claims.

The present invention provides an improved method of operating a toy for children. The method comprises operating the toy in a first mode and a second mode. The toy operates in the first mode autonomously and receives a spoken input from a user at the toy. The spoken input is received in response to a task being presented to the user. The task may be presented by means of a user interface comprising at least one of one or more displays and one or more speakers of the toy. Further, the toy autonomously evaluates the spoken input with respect to the presented task and signals a result, which is at least in part based on the evaluation of the spoken input, to the user. The signaling of the result comprises a movement of one or more mechanical parts of the toy. The toy operating in the second mode comprises establishing a communication channel between the toy and a device of a third party to allow communication between the user of the toy and the third party.

Further, the present invention provides an improved toy for children. The toy is configured to operate in a first mode and a second mode and has one or more mechanical parts. Moreover, the toy comprises one or more storage media, a user interface, a network component, one or more microphones, and one or more electromechanical actuators. In the first mode, the user interface is configured to present a task to a user, the one or more microphones are configured to receive a spoken input from the user in response to the task being presented, the one or more processors are configured to evaluate a signal associated with the spoken input with respect to the presented task, and at least one of the one or more electromechanical actuators configured to provide for a movement of one or more of the mechanical parts to signal a result at least in part based on the evaluation of the signal to the user. In the second mode, the network component is configured to establish a communication channel between the toy and a device of a third party to allow communication between the user and the third party.

The present invention provides for several advantages over prior art systems. For example, the present invention provides an improved method for operating a toy by providing a toy that is configured to evaluate and respond to a user input autonomously, and additionally provides the functionality for intervention by a third party, thus providing improved control and functionality of the toy, as well as an efficient use of the toy. Specifically, the present invention provides feedback to the end user (correct or incorrect) in a manner that can be understood by small children that may be at the initial stages of language learning. For these children, it may be beneficial to experience motion by the toy instead of audiovisual effects, like an indication on a display or a specific sound. Accordingly, the present invention advantageously facilitates kinesthetic learning methods by providing for a movement of one or more parts of the toy.

One aspect of the present invention is that the toy can be experienced by the user/child on her/his own and additionally in sessions with a third party. For example, this could take place in therapy sessions with an SLP remotely connected to the toy and in training sessions by the child without the SLP or any other third party. Regarding the case with the therapy sessions, it may be burdensome for parents to transport their children to all therapy sessions. The present invention allows for remote therapy sessions with a known toy in a known location/environment, e.g. the child's home, which provides for a familiar atmosphere for the child and may facilitate therapy. Specifically, the aspect of remote communication allows for efficiently holding therapy sessions, since the third party can connect with the child through the device from anywhere in the world. Further, a single toy can be used to carry out therapy sessions and individual training/practicing by the child on his/her own, which saves money since only one toy/device is needed for both occasions (therapy and private training).

In case of languages learned in a bilingual context but not widely diffused, like Maltese or Gaelic, no activities for children may be available in these languages on conventional toys. However, the present invention allows the direct communication between the child and a third party without having to rely on the evaluation by the toy. The user can still be assisted to learn these languages by utilizing the present invention. Accordingly, the functionality is increased compared to conventional systems, which are limited to predefined single languages.

In an embodiment of the invention, the result of the evaluation, which may comprise comparing the spoken input to a correct answer of the task by means of speech recognition, may additionally be signaled to the user by at least one of one or more displays configured to display an indication of the result, one or more speakers configured to emit sound waves corresponding to an indication of the result, and one or more light sources configured to signal an indication of the result.

One aspect of the present invention is to provide an improved method that addresses multiple senses of the user including touch (moving parts of the toy that are controlled by electromechanical actuators), sight (visual effects on the displays of the toy and/or the movement of one or more parts of the toy) and sound (playing sound via speakers). Further, the signaling of the toy may provide for a surprising effect. For example, the movement of the one or more parts of the toy may comprise opening a compartment of the toy to signal a result of the evaluation to the user. Thus, the user can be provided with a reward that is stored in the compartment. Accordingly, the present invention provides for a multi-sensory experience for the user, and provides for the necessary rewards and learning experience for the user by merging different technological modalities, including movement, flashing lights, onscreen animations (including LCD eyes and main screen) and sound.

According to an embodiment of the present invention, the second mode further comprises remotely controlling the toy, including preferably one or more processors, by the device of the third party. Remotely controlling the toy and/or one or more processors may comprise at least one of downloading tasks from a cloud, presenting at least one of an image, a video, an animation, a game, a symbol and a text on one or more displays of the toy to the user, playing sound via speakers of the toy, wherein the sound is associated with at least one of a question, a correct answer and a reward, controlling one or more electromechanical actuators to perform a movement of one or more of the mechanical parts of the toy and controlling one or more light sources of the toy.

According to an aspect of this embodiment, an improved method of operating a toy for children is provided by allowing a third party to remotely control the toy. In particular, the third party can reward the child with feedback that is familiar to the child, since the child is used to and familiar with the toy. Moreover, the third party may also reward the child/user of the toy with a reward during a discussion between the user and the third party. This provides for an increased functionality of the toy and allows the third party to intervene in case of errors or correct answers not only by stating the correct answer or making a compliment but also by an expression of the toy that may be a sound, a movement, a presentation on a display or any other signal by the toy.

In embodiments, the method further comprises sending the spoken input to a cloud and analyzing the spoken input in the cloud. This allows for updating the speech recognition algorithm of the toy based on the analysis of the spoken input. Analyzing the spoken input in the cloud may comprise analyzing the spoken input by means of machine learning. The machine learning allows acquiring the phonemes and/or syntax expressed by the user. Furthermore, the cloud analysis allows suggesting the right pronunciation to the user. By updating the speech recognition algorithm based on the cloud analysis, the reliability of the evaluation of the spoken input in the first mode can be increased.

According to an embodiment, the task may be a user specific task that is created in a cloud or on the device of the third party. After creating the user specific task, the user specific task may be downloaded from the cloud or the device of third party by the toy. This embodiment allows providing for user specific tasks that correspond to the skills of the user and allows creating new tasks for the user to facilitate an increased flexibility and alternation of tasks presented to the user. Moreover, downloading data, such as tasks, from the cloud or the device of the third party saves storage capacities on the toy. Furthermore, the flexibility of content used and the control exercised by the third party in sourcing materials are two features through which the third party may help a user of the toy to acquire language skills in a bilingual context.

In embodiments of the invention, the method further comprises switching the toy from the first mode to the second mode. The switching may be performed by at least one of requesting the establishment of the communication channel by the user of the third party, requesting remote control of the toy by the device of the third party, accepting a request to switch to the second mode by the user or the third party, and receiving instructions to switch to the second mode from the device of the third party or the toy. The method may further comprise operating the toy in the first mode and subsequently operating the toy in the second mode. Alternatively, the toy may simultaneously operate in the first mode and the second mode. One aspect of this embodiment is to provide for an efficient method to intervene by the third party and correct or assist the user in a fast manner.

According to an embodiment, the toy may log all or some of the interactions with the toy. The logged interactions may be analyzed in the cloud or on the toy to determine a progress of the user based on the logged interactions. This advantageously allows for updating the software of the toy, loading new tasks to the toy, unlocking new tasks stored on the toy, and/or notifying an entity about the progress of the user based on the progress of the user. Moreover, by logging some or all interactions with the toy, it can be determined how frequently the user of the toy is using the toy. This allows the third party to remotely control and monitor the user's progress without directly accessing the toy. To provide for an efficient evaluation of the user, an alarm can be sent to an entity, if the number of locked interactions indicates an infrequent use of the toy. Accordingly, in an example, the child's usage and progress can be monitored giving parents a clear visual indication of their children's language developmental level.

The following detailed description and accompanying drawings provide a more detailed understanding of the nature and advantages of the invention.

### BRIEF DESCRIPTION OF THE DRAWINGS

A plurality of exemplary embodiments of the invention is explained in more detail below using the accompanying figures.
Fig. 1 shows a schematic drawing illustrating a toy and its components, according to an embodiment of the invention.
Fig. 2 shows a schematic drawing illustrating a system comprising a toy and the operation of the toy, according to an embodiment of the invention.
Fig. 3 shows another schematic drawing illustrating a system comprising a toy and the operation of the toy, according to another embodiment of the invention.
Figs. 4 shows a flow diagram illustrating a method of operating a toy, according to an embodiment of the invention.
Fig. 5 shows a schematic drawing illustrating a toy and two states of the toy, according to an embodiment of the invention.

### DETAILED DESCRIPTION OF THE INVENTION

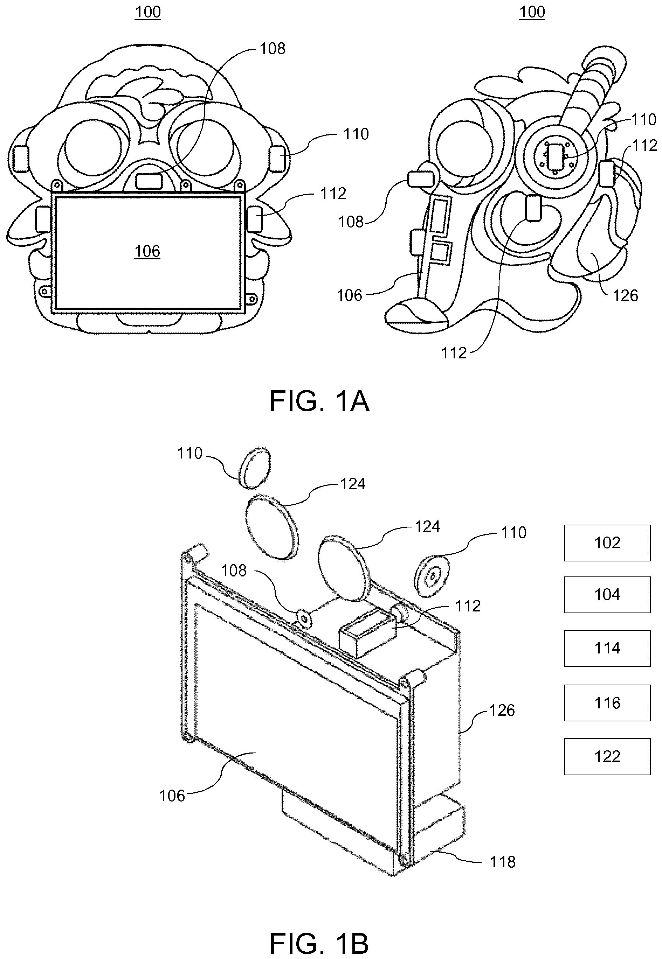

Described herein are systems and techniques for operating a toy. For purposes of explanation, numerous examples and specific details are set forth in order to provide a thorough understanding of the embodiments of the present invention. Embodiments as defined by the claims may include some or all of the features in these examples alone or in combination with other features described below, and may further include modifications and equivalents of the features and concepts described herein. The following description will refer to Figures 1 to 5 explaining embodiments of the present invention in detail.

Fig. 1A depicts schematic drawings of device 100 including a front and side view according to a preferred embodiment of the invention. In particular, device 100 may be a portable and/or chargeable toy. In embodiments, the toy 100 may be a toy animal, which provides for comfort, companionship and other health benefits for children. The toy animal 100, as shown in Fig. 1A, looks like a penguin to provide for a gender-neutral toy. In other embodiments, the toy 100 may look like for example, a doll, a robot or a car. Further, toy 100 consists of a number of technical components. Fig. 1B illustrates technical components of the toy 100 without the hull of the toy 100, according to an embodiment. As shown in Fig. 1A and/or Fig. 1B, the toy 100 comprises one or more storage media 102, one or more processors 104, a user interface 106, one or more microphones 108, one or more speakers 110 and one or more electromechanical actuators 112.

The one or more storage media 102, which may comprise a micro SD, are connected to the one or more processors 104 and are configured to store one or more programs, components and functions. According to an embodiment, the one or more storage media 102 are configured to store a speech recognition algorithm, which is configured to create wording from a signal, which is provided by a microphone and associated with a spoken input. This allows the system to compare the spoken input to data (like a correct answer to a task) stored on the toy 100. The speech recognition algorithm may be trained to operate with multiple languages, including for example, both English and Maltese. In an embodiment, the one or more processors 104 are configured to evaluate the signal by comparing the wording provided by the speech recognition algorithm to data, which corresponds to an expected wording. The expected wording may correspond to a task, which has previously been presented to the user of toy 100. Furthermore, the one or more storage media 102 may be configured to enable offline storage and tracking of all the data captured by the toy 100. The offline storage of data may be beneficial when the toy is not connected with a network or the Internet. Once a toy is connected to the network, the data may be transmitted automatically to a cloud system to be accessed, if authorized, by a third-party user. The one or more processors 104 may be connected to one or more components of toy 100 and are configured to process instructions stored on the one or more storage media 102. Moreover, according to one embodiment of the present invention, the one or more processors 104 of the toy 100 are configured to be remotely controlled and to receive instructions from a remote device of a third party. Controlling the one or more processors 104 remotely may comprise remotely controlling at least one of the components of toy 100, including, for example, one or more displays/user interfaces 106, one or more speakers 110, one or more electromechanical actuators 112 and one or more light sources 116.

User interface 106 may comprise one or more displays, wherein at least one display of the one or more displays may preferably be a touchscreen. The fact that a touchscreen is integrated into a physical toy, allows the combination of touchscreen based games with physical-type play activities. The one or more displays may be configured to display data, like images, videos, animations, texts and/or games. The combination of touchscreen based games with physical-type play activities may comprise the usage of one or more additional components that can interact with the toy. These additional components may also be toys. For example, the additional components may be toy animals in the form of fish, squids and/or krill, which may be regarded as food for the toy penguin 100. In embodiments, the toy penguin 100 may present a physical task to the user that requests the interaction between the toy penguin 100 and one or more of the additional components. Each of the additional components may comprise a pre-programmed radio-frequency identification (RFID) tag that may be used to automatically identify an additional component by a radio-frequency identification (RFID) reader of the toy penguin 100. Accordingly, if the user moves an additional component close to the toy 100, the toy 100 may detect the tag of the additional component. After the toy detects an RFID tag, the toy may perform one or more actions. For example, the toy may prompt a question or a further task. The question or the further task may comprise requesting the user for a word or a sentence. In response to the further task, the toy 100 awaits a spoken input and evaluates the spoken input after it receives said spoken input with respect to the further task. In embodiments, the toy 100 does a gesture in response to a result of the evaluation. In case of a spoken input that matches to the further task and is correctly pronounced, the user may be rewarded by the toys gesture/movement. In case the spoken input was not pronounced correctly or the toy 100 receives a spoken input that does not match to a pre-stored answer related to the further task, the toy 100 gives three chances and then provides the correct or expected answer to the further task. This play activity may be repeated after the toy receives the correct answer to the further task or after the third chance. In other embodiments, the play activities comprise that the toy requests the user to move to a certain position with the toy 100, which is tracked by one or more sensors (e.g. gyroscope or accelerometer) of the toy 100. After the user arrives at the certain position, the toy may present a task in the form of a game. For example, the game may be related to a quiz, a puzzle, a maze or a question being displayed on the touchscreen and prompting the user of the toy for input. These play activities can be played by the user of the toy alone or as a multiplayer activity. Further, these play activities can be played between the user of the toy and another person, like an SLP or a parent of the user.

Further, the one or more displays may be configured to represent a part of the outer appearance of the device/toy 100, for example, two small LCD screens 124 may be placed in the head of the toy to represent the eyes in order to provide a sense of the toys emotion. The one or more microphones 108 are configured to receive sound waves, e.g. a spoken input, and to provide a signal corresponding to the sound waves. The signal may be stored in the one or more storage media 102. Accordingly, the toy 100 is configured to record a spoken input. The one or more speakers 110, which, according to a preferred embodiment, comprise two speakers, are configured to provide sound to the user and may be arranged on opposite sides of the toy 100 to enhance the sound quality. The one or more electromechanical actuators 112 are configured to provide for a movement of one or more mechanical parts of the toy 100. Examples of such movement comprise rotation of wheels at the bottom of the toy, vibration, clapping of moveable hands, etc. According to one embodiment of the present invention, the one or more electromechanical actuators 112 may be configured to be remotely controlled.

Toy 100 as depicted in Fig. 1B further comprises a network component 114, one or more light sources 116, a power supply 118 and a switch 120. The network component 114 may be configured to establish a communication channel between the toy 100 and the device of a third party to allow communication between the user and the third party. Furthermore, network component 114 may be configured to provide for a connection to a cloud for data transfer. Moreover, the network component may be configured to enable the third party to access the toy, when it is online. The toy may be accessed through a web-based or dedicated application to control all or a portion of the functions of the toy. In particular, the network component 114 may receive the necessary instructions and information to allow for remote control of the one or more processors 104, and thus to allow for remote control of the toy's functionality and movement. The one or more light sources 116, preferably comprising one or more LEDs, may be configured to provide for an optical signal. Further, toy 100 may comprise its own power supply 118, which may be one or more batteries, e.g. a 12V battery pack, to provide the toy with electrical power. Additionally, the toy may comprise two small LCD screens 124, which may be placed in the head of the toy to represent the eyes in order to provide a sense of the toy's emotion. Moreover, toy 100 as shown in Fig. 1B comprises further components 122, like one or more mechanical buttons, one or more sensors (like an accelerometer), a radio-frequency identification (RFID) reader and one or more cameras. According to an embodiment, toy 100 comprises a compartment 126 to store items.

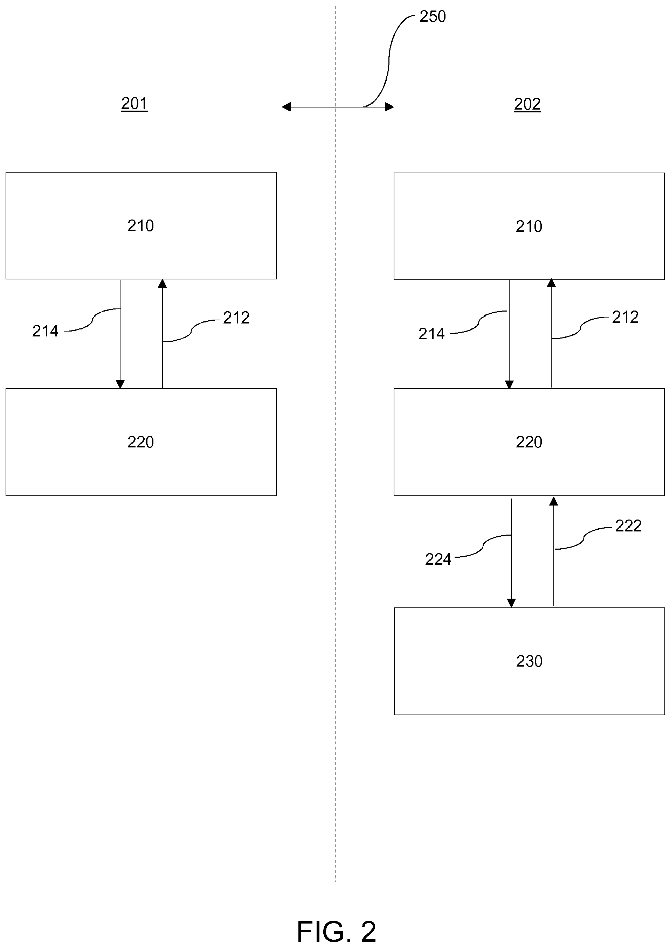

Fig. 2 depicts an embodiment of the present invention. In particular, Fig. 2 shows a system comprising toy 220, and the operation of the toy 220. The toy 220 is configured to operate in a first mode 201 and a second mode 202. According to an embodiment, toy 220 can operate in a first mode 201 and then switch to second mode 202 as indicated by arrow 250 in Fig. 2. Further, arrow 250 also indicates that the toy 220 can switch from the second mode 202 back to the first mode 201. In such an embodiment, the toy 220 subsequently operates in a second mode after having operated in the first mode. According to another embodiment, the toy 220 may operate simultaneously in the first mode 201 and in the second mode 202. Operating simultaneously in the first mode 201 and in the second mode 202 may comprise operating simultaneously in both modes after switching from the first mode 201 to the second mode 202 or after switching from the second mode 202 to the first mode 201. According to an embodiment, the toy 220 may operate in the first mode 201 for a first time period and subsequently operates in the second mode for a second time period, until, in a third time period, the toy operates in both modes 201 and 202. For example, the third party or a user of the toy may choose if the toy 220 operates subsequently in the first mode and the second mode or if the toy 220 operates simultaneously in both modes. Accordingly, the first mode 201 and the second mode 202 are combinable.

The first mode 201 comprises actions 214 and 212 of the toy 220 interacting with user 210. Toy 220 operating in the first mode 201 may perform one or more actions autonomously. In a first step 214, the toy receives the spoken input from user 210 at the toy 220, in particular at one or more microphones, in response to a task been presented to the user. Receiving the spoken input may comprise recording the spoken input. Prior to receiving the spoken input, the toy may present a task to the user. This may be performed by presenting/displaying the task on one or more displays of the toy 220. The task may be presented in the form of at least one of a video, an image, an animation, a game, a text and any other presentation on the one or more displays that prompts the user 210 to respond to the task with the spoken input. According to one or more embodiments, the task is presented by means of augmented reality (AR). Alternatively or additionally, the task may be presented by playing a sound file by means of one or more speakers of the toy. In this case, the task corresponds to a sound being made/played by the toy 220.After step 214 of receiving the spoken input, the toy 220 evaluates the spoken input with respect to the presented task. This may comprise using a speech recognition algorithm stored on the toy to process the spoken input and to generate wording that can be compared to a correct answer of the task. The correct answer may be stored on the toy 220. A result of the evaluation may be correct, incorrect or partially correct. In response to the evaluation, the toy 220 signals a result, which is at least in part based on the evaluation of the spoken input, to the user 210. This step is indicated by reference signs 212 of Fig. 2. The signaling of the result comprises a movement of one or more mechanical parts of the toy 220. For example, toy 220 may clap its hand or start spinning in case of a correct answer. Additionally, signaling the result may comprise at least one of displaying an indication of the result on one or more displays, playing an audio file corresponding to an indication of the result in one or more speakers of the toy 220, and signaling an indication of the result by one or more light sources, e.g. LEDs. Displaying an indication of the result on one or more displays may comprise displaying a smiley, a thumb pointing upwards or downwards, a symbol, or rewarding points, which can be used by the user to unlock features on the toy 220. Playing an audio file to indicate a result may cause the toy to emit sound comprising applause, a stored prerecorded sentence, or an animal noise. Signaling an indication of the result by one or more light sources may comprise switching on and off one or more of the one or more light sources or signaling the result in different colors. Accordingly, the user 210, who may be a child, can sense in multiple ways if his/her spoken input/answer in response to the presented task was correct or incorrect, including hearing, feeling and seeing. Thus, toy 220 provides for an improved indication whether a spoken answer in response to a presented task is correct.

In at least one embodiment, the toy 220 may receive an input by a user 210 interacting with the toy 220 in response to a presented task. In this embodiment, the toy 220 may operate in a mode, which may be the first mode 201, a second mode 202 or a third mode. The input may include at least one of input at a touchscreen of the toy 220 and/or an interaction with the toy 220 per se (e.g. by scanning RFID tags or moving the toy). The interaction between the user 210 and the toy 220 may be a physical interaction. For example, the user 210 may push one or more physical or virtual buttons, select items presented on the touchscreen or may provide for an input at the toy through one or more sensors of the toy. The toy 220 may evaluate the received input. After the evaluation of the received input, the toy 220 may autonomously signal a result of the evaluation. Signaling the result may comprise at least one of a physical signal (like a movement of the toy 220), an acoustic signal and a visual signal.

Turning back to Fig. 2, when the toy 220 operates in the second mode 202, as indicated on the right side of Fig.1, toy 220 may still be configured to perform all actions of the first mode 201, according to an embodiment. Accordingly, toy 220 is still capable of autonomously presenting a task to the user 210, to receive/record a spoken input from the user 210 in response to the presented task, to evaluate a spoken input from the user 210, and to signal a result of the evaluation to the user 210. According to another embodiment, in which the toy operates subsequent to the first mode 201 in the second mode 202, the toy 220 may be limited to the functions of the second mode 202 and does not autonomously perform the steps or functions of the first mode 201. Alternatively, the toy may still perform the actions and functions of the first mode 201 in the second mode, but only if instructed to do so. Specifically, the toy 220 may receive instructions, for example, from a device 230 of a third party in a remote location, to perform one or more of the actions and functions of the first mode 201. In embodiments, the third party may be a person, like a SLP, a teacher, a guardian of the user/child or any other person.

Device 230 is an electronic device and may comprise a computer, a mobile phone, a Smartphone, a tablet computer, a notebook computer, a wearable device, etc. Further, device 230 may comprise one or more storage media and one or more processors, and device 230 may be configured to transmit data via a network. Moreover, device 230 may be remote from the toy 220.

According to an embodiment, the second mode 202 comprises establishing a communication channel between the toy 220 and device 230 of the third party, which is indicated by reference sign 224. The user 210 and the third party, which may be a speech trainer or therapist, can communicate through the established communication channel. Furthermore, as indicated by reference number 222, the third party may remotely control one or more components, e.g. one or more processors, of the toy 220. According to an embodiment, the third party takes control of the whole toy 220 and all its functions by remotely controlling one or more components of the toy 220. This allows the third party to present at least one of an image, a video, an animation, a game, a symbol and a text on one or more displays of the toy to the user. Moreover, while the toy 220 is in the second mode 202 and remotely controlled by the third party, the toy 220 can receive instructions from device 230 to play sound via speakers of the toy 220, to perform a movement of one or more mechanical parts of the toy by one or more electromechanical actuators, and/or to switch on or off one or more light sources of the toy 220. The sound and/or the data presented on one or more of the displays may be associated with at least one of a question, the task, a correct answer and a reward.

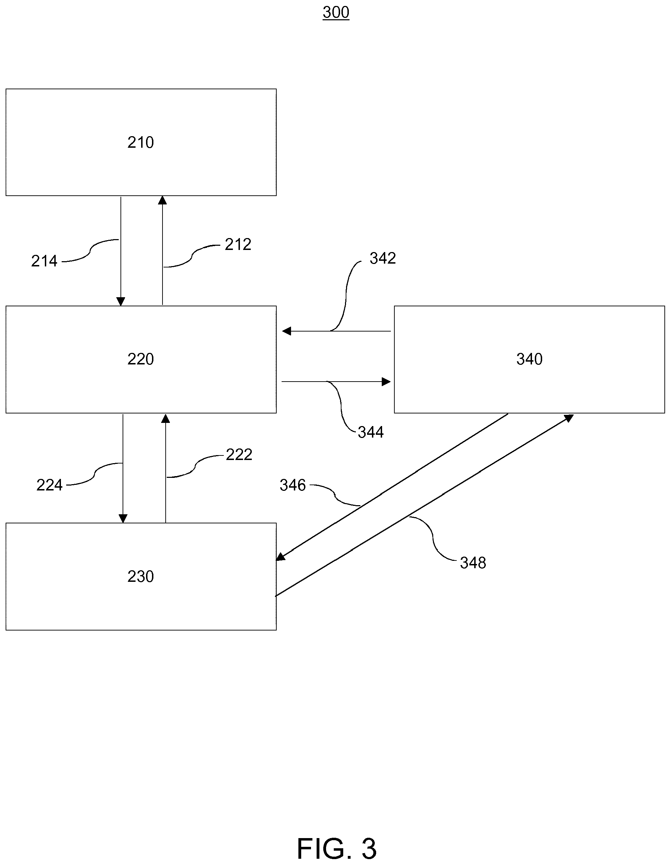

Fig. 3 shows a schematic drawing illustrating a system 300 and a method for operating a toy 220, according to an embodiment of the invention. System 300 comprises a user 210, a toy 220, a device 230 and a cloud 340. Toy 220 may operate in a first mode and/or a second mode as explained in accordance with Fig. 2. According to an embodiment, the third party may create a task that is presented to the user 210. The task may be created in the cloud 340 or the device 230 of the third party. Step 348 indicates the creation or modification of a task in the cloud by the third party with device 230. According to this embodiment, the task is a user-specific task. After creating the task, the task may be downloaded by the toy 220 or uploaded to the toy 220 from the cloud 340. Alternatively, the task may be uploaded from device 230 to toy 220 or the toy 220 may download the task from device 230. The downloading of the task may be independent of the mode, in which the toy 220 is operating. For example, the toy may operate in the second mode and the third party is remotely instructing the toy 220 to download the task from the cloud 340.

In accordance with embodiments of the invention, the spoken input received at toy 220 indicated by reference sign 214, is sent to cloud 340 as indicated by reference sign 344. The spoken input that is sent to the cloud may be a spoken input received in the first mode of the toy 220 or a spoken input received in the second mode of the toy 220. According to an embodiment all input received by the toy 220 is transmitted to cloud 340. Further, cloud 340 is configured to analyze the spoken input. Analyzing the spoken input in the cloud may comprise analyzing the spoken input by means of machine learning. This allows intelligently acquiring and learning the correct phonemes and/or syntax expressed by the user. Based on the analysis in the cloud, a configuration file can be generated to update the speech recognition algorithm on the toy 220. The process of updating toy 220 based on the cloud analysis is indicated by arrow 342 in Fig. 3. Moreover, the machine learning may allow suggesting the right pronunciation to the user regarding a received spoken input at toy 220.

According to embodiments of the invention, toy 220 logs all or a portion of the interactions with the toy 220. For example, toy 220 may log the user /child's usage of the toy 220 to obtain a progress of the child 210. Alternatively or additionally, the toy 220 may log the child's interaction to obtain an indication of how frequently the child/user 210 uses the toy 220. If the toy is infrequently used, a notification, e.g. an alarm, may be sent to an entity to notify the third party, the guardians of the child or any other human or computer. The logged interactions may be provided to the cloud 340 and analyzed to determine a progress of the user 210. As indicated by arrow 346 of Fig. 2, the third party can obtain the progress of the user 210, by accessing the progress of the user 210, which is stored on cloud 340. For example, the third party may download the user's progress. According to a different embodiment, toy 220 determines the progress of the user based on the logged interactions. In response to determining the progress, one or more steps may be performed based on the progress. The one or more steps may comprise at least one of updating the toy, loading new tasks to the toy, unlocking new tasks stored on the toy, notifying an entity about the progress and sending an alarm to an entity, if the number of locked interactions indicates an infrequent use of the toy.

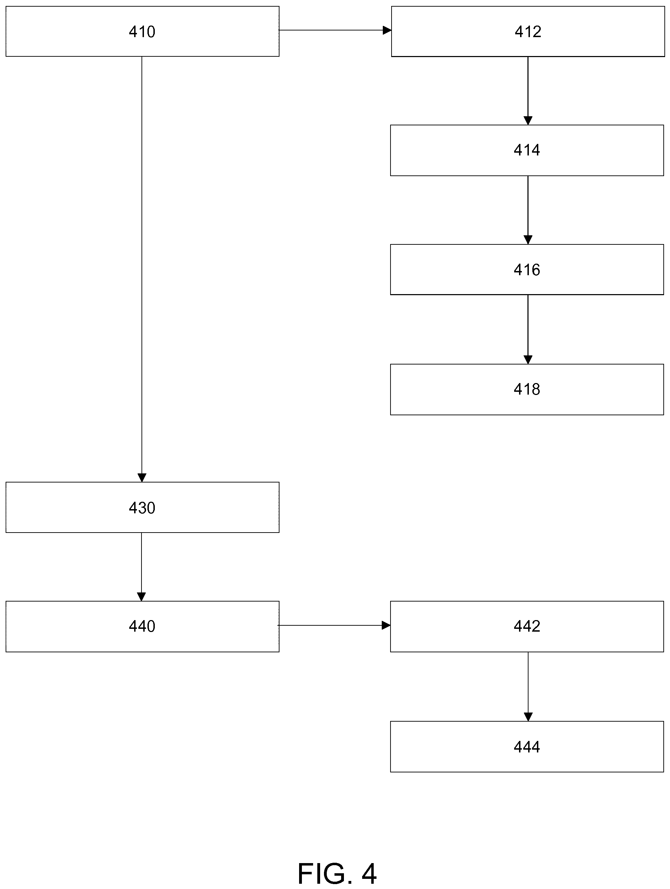

Figs. 4 depicts a flow diagram illustrating a method of operating a toy, according to an embodiment of the invention. The method comprises, in a first step 410, operating the toy in the first mode. The toy operating in the first mode performs all functions/steps autonomously. The first mode may comprise step 412, which includes presenting a task to a user by means of a user interface of the toy. The user interface may be at least one of one or more displays and one or more speakers comprised in the toy. In step 414, the toy receives/records a spoken input from the user in response to the task being presented to the user. The toy may receive the spoken input by means of one or more microphones. Further, the method comprises evaluating the spoken input with respect to the presented task as indicated by step 416 of Fig. 4. In step 418 of the first mode, a result, which is at least in part based on the evaluation of the spoken input, is signaled to the user. The signaling comprises at least one movement of one or more mechanical parts of the toy.

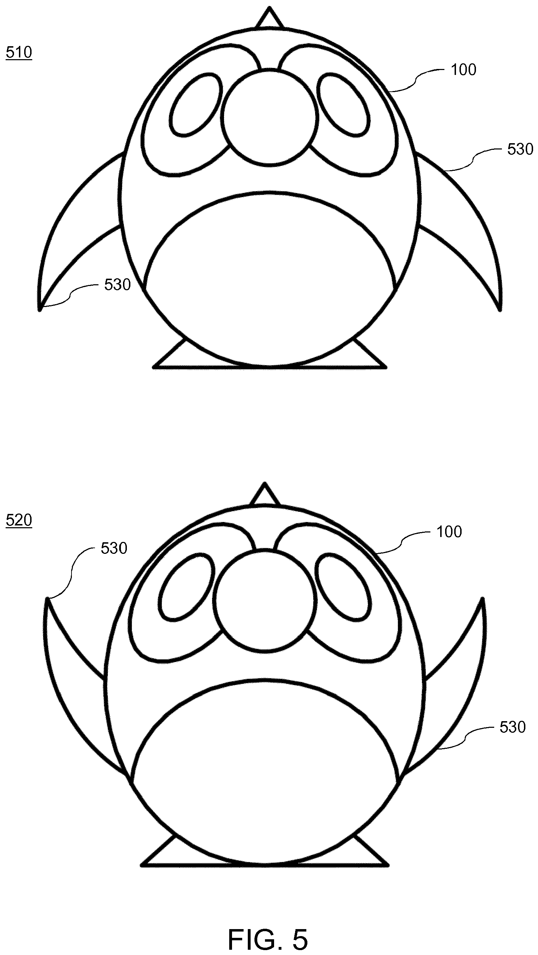

An example of such a movement is illustrated in Fig. 5. In a first state 510, which may be the neutral state, one or more mechanical parts 530, e.g. two arms, of the toy 100 may be in a first position, prior to the step 418 of signaling a result to the user. In step 418 the result is signaled, which comprises switching from the first state 510 to a second state 520. In the second state 520, the toy 100 signals the result of the evaluation by means of raising its arms 530 to signal a successful response to a presented task. The movement may be a movement to a specific position in which the moveable parts reside or a continuous movement, like a waving movement, for a certain amount of time. The certain amount of time may be a predefined amount of time, e.g. 2 or 3 seconds. Further, movements may be possible to signal the result. According to an embodiment, the toy claps its hands, which provides for a multi-sensory experience for the child, since the child/user can see, hear and feel the toy 100 clapping. Alternatively or additionally, the toy may perform further movements with different components controlled by different electromechanical actuators. For example, toy 100 may additionally open its compartment to reward the child with sweets that have previously been stored in the compartment or the toy may start turning his wheels to drive a predetermined track.

Turning back to Fig. 4, the steps 412 to 418 corresponding to the first mode of the toy may be repeated in this order as long as the toy operates in the first mode. In an embodiment, step 412 may be triggered after the toy signals a correct answer to the user. Alternatively, step 412 may be triggered according to an application program executed by the toy or by instructions from the user.

The toy operating in the first mode may switch to a second mode, according to an embodiment of the invention. The step of switching from a first mode to a second mode is indicated by reference sign 430 in Fig. 4. According to embodiments, the switching may be performed in response to the user requesting the establishment of a communications channel with the third party, the third party requesting the establishment of a communications channel with the user, the user accepting a request to switch to the second mode, the third party accepting a request to switch to the second mode, the device of the third party receiving instructions to switch to the second mode and/or the toy receiving instructions to switch to the second mode. The switching may be performed in both directions from the first to the second mode, and from the second to the first mode. The switching from a second mode to a first mode may be performed by cancelling the remote control of the toy or by cancelling the established communication channel by at least one of the user and the third party.

After switching from a first mode of the toy to a second mode of the toy, the toy operates in the second mode as indicated by step 440 of Fig. 4. The second mode may comprise steps 442 and 444. Step 442 comprises establishing a communication channel between the toy and a device of a third party to allow for communication between the user and the third party. Step 444 comprises remotely controlling the toy by the device of the third party. Remotely controlling the toy comprises remotely controlling one or more components or functions of the toy by the device of the third party. Step 442 and 444 may be performed simultaneously and/or subsequently. Moreover, steps 442 and 444 can be performed independently from each other and without a specific order. For example, the third party can talk to the user through the toy and additionally control one or more electromechanical actuators to provide for a movement of the toy. For example, the third party can control the toy to perform a movement as illustrated in Fig. 5, where the device is in a first state 510 with lowered movable arms 530 and after remotely instructing the toy to raise his arms, the toy switches to second state 520 in which the toy raises its arms 530. Additionally or alternatively, the third party can play a sound file stored in the toy with a speaker of the toy, since the third party may have full control of the toy and all its functions.

According to embodiments of the invention, remotely controlling one or more components or functions of the toy comprises remotely controlling one or more processors, one or more displays, one or more electromechanical actuators, one or more light sources, one or more speakers, the network component and one or more programs or functions stored on the one or more storage media of the toy. For example, in the second mode, the third party may have access to all programs and data stored on the device. This allows the third party to choose a picture from the storage of the toy and to display the picture to the user, while communicating with the user. In this example, the user and the third party can talk through the toy about the picture, e.g. the third party can ask the user what the picture shows. Furthermore, if desired by the third party, the third party can control further components of the device including one or more speakers to emit sound, one or more electromechanical actuators to provide for a movement of one or more of the mechanical parts of the toy, and one or more light sources. The third party may control some components of the toy to animate the user to continue playing with the toy, to signal an indication of a result in response to a task, to reward the user or to give a hint, which corresponds to a task presented to the user. The third party may reward the user of the toy by merging different technological modalities, which are movement, flashing lights, onscreen animations and sound.

According to embodiments, the third party situated in a remote location from that of the user may choose an appropriate activity for the user. For example, a SLP may prepare a speech therapy session with a child by choosing data that will be discussed during the speech therapy session. This includes sending configuration settings to the cloud and downloading the configuration settings to the device. The configuration settings may include at least one of the level of difficulty, the required skills and the session's dynamics.

The second mode will now be explained with regard to an example. After entering the second mode, an SLP may be in full control of the device. This allows the SLP to select any theme, subject, level and variable throughout the course of the therapy session. The SLP can now select a picture, showing, for example, a boy drinking milk, and asks the user/child to describe the picture. The picture appears on the child's toy and the child answers back. The first attempt by the child may result in a syntactically incorrect sentence. This could be either detected by the device or recognized by the SLP. The SLP communicates the correct sentence and encourages the child to repeat the sentence. Suppose that after the second attempt the sentence is correct, the SLP remotely controls the physical movement of the toy so that the device claps its hands to reward the child. This engages and motivates the child to acquire the language skills in a more effective way.

The user/child responses may be automatically saved on a cloud in order to keep track of the child's progress. The data stored can be exploited by the toy to learn from the child's responses and suggest the right response when the child independently interacts with the toy (in the first mode).

As explained above, the present invention provides for an improved method of operating a toy by augmenting the visual and auditory learning methods with kinesthetic learning methods (multi-sensory methods using body movements of the toy). The toy can be used by a user/child on his/her own, wherein the toy works in this mode via a set of pre-programmed instructions. However, when the third party/SLP is connected remotely to the device, it becomes a behavior/learning dependent reward system, which may be created ad-hoc and coordinated in real-time. The aspect of remote operation and communication allows the third party to connect with the user through the device from anywhere in world. Specifically, according to embodiments, the present invention allows educators to remotely control the movement and dynamics of the toy by providing a real-time experience of multisensory interaction between the toy and the child. Accordingly, the toy in accordance with the present invention combines the needs of different users, which may be the needs of children, parents, SLPs and other caregivers concerning communication, cognitive skills and social skills.

## Claims

1. A method of operating a toy (100; 220) for children (210), the method comprising:
operating (410) the toy (100; 220) in a first mode (201), the toy (100; 220) in the first mode (201) autonomously performing the steps of:
receiving (214; 414) a spoken input from a user (210) at the toy (100; 220) in response to a task being presented to the user (210);
evaluating (416) the spoken input with respect to the presented task; and
signaling (212; 418) a result at least in part based on the evaluation of the spoken input to the user (210), wherein signaling the result comprises a movement of one or more mechanical parts of the toy (100; 220); and
operating (440) the toy (100; 220) in a second mode (202), the second mode (202) comprising:
establishing (224) a communication channel between the toy (100; 220) and a device (230) of a third party to allow communication between the user (210) of the toy (100; 220) and the third party.

2. The method of claim 1, wherein evaluating (416) the spoken input comprises comparing the spoken input to a correct answer of the task by means of speech recognition.

3. The method of one of claims 1 and 2, wherein the second mode (202) further comprises remotely controlling (222) one or more processors (104) of the toy (100; 220) from the device (230) of the third party.

4. The method of claim 3, wherein remotely controlling the one or more processors comprises at least one of:
downloading tasks from a cloud (340);
presenting at least one of an image, a video, an animation, a game, a symbol and a text on one or more displays (106) of the toy (100; 220) to the user (210);
playing sound via speakers of the toy (100; 220), wherein the sound is associated with at least one of a question, a correct answer and a reward;
controlling one or more electromechanical actuators (112) to perform a movement of one or more of the mechanical parts of the toy (100; 220); and
controlling one or more light sources (116) of the toy (100; 220).

5. The method of one of claims 1 to 4 further comprising:
sending (344) the spoken input to a cloud (340); and
analyzing the spoken input in the cloud (340).

6. The method of claim 5 further comprising updating (342) a speech recognition algorithm of the toy (100; 220) based on the cloud analysis of the spoken input,
wherein analyzing the spoken input in the cloud (340) comprises analyzing the spoken input by means of machine learning, and
wherein the machine learning allows to acquire the correct phonemes and/or syntax expressed by the user (210) and to suggest the right pronunciation to the user (210).

7. The method of one of claims 1 to 6, wherein the first mode (201) further comprises presenting (412) the task to the user (210) by means of a user interface (106), wherein the user interface (106) is at least one of one or more displays and one or more speakers of the toy (100; 220).

8. The method of one of claims 1 to 7 further comprising:
creating (348) the task in a cloud (340) or the device (230) of the third party, wherein the task is a user specific task; and
downloading the user specific task from the cloud (340) or the device (230) of the third party.

9. The method of one of claims 1 to 8 further comprising switching (430) the toy (100; 220) from the first mode (201) to the second mode (202), in response to at least one of:
requesting the establishment of the communication channel by the user (210) or the third party;
requesting remote control of the toy (100; 220) by the device (230) of the third party;
accepting, by the user (210) or the third party, a request to switch to the second mode (202); and
receiving instructions to switch to the second mode (202) from the device (230) of the third party or at the toy (100; 220).

10. The method of claim 1, wherein the first mode (201) further comprises:
logging interactions with the toy (100; 220);
providing the logged interactions to a cloud (340);
analyzing the logged interactions in the cloud (340); and
determining a progress of the user (210) based on the logged interactions.

11. The method of claim 10 further comprising at least one of:
updating of the toy (100; 220) based on the progress of the user (210);
loading new tasks to the toy (100; 220) based on the progress of the user (210);
unlocking new tasks stored on the toy (100; 220) based on the progress of the user (210);
notifying an entity about the progress; and
sending an alarm to an entity, if the number of logged interactions indicates an infrequent use of the toy (100; 220).

12. A toy (100; 220) for children configured to operate in a first mode (201) and a second mode (202), the toy (100; 220) having one or more mechanical parts and comprising:
one or more storage media (102);
a user interface (106);
a network component (114);
one or more microphones (108); and
one or more electromechanical actuators (112),
wherein, in the first mode (201),
the user interface (106) is configured to present a task to a user (210);
the one or more microphones (108) are configured to receive a spoken input from the user (210) in response to the task being presented to the user (210);
the one or more processors (104) are configured to evaluate a signal associated with the spoken input with respect to the presented task; and
at least one of the one or more electromechanical actuators (112) is configured to provide for a movement of one or more of the mechanical parts to signal a result at least in part based on the evaluation of the signal to the user (210); and
wherein, in the second mode (202),
the network component (114) is configured to establish a communication channel between the toy (100; 220) and a device (230) of a third party to allow communication between the user (210) and the third party.

13. The toy (100; 220) of claim 12, wherein, in the second mode (202), the one or more processors of the toy (100; 220) are remotely controlled from the device (230) of the third party, wherein remotely controlling the one or more processors (104) comprises remotely controlling at least one of the one or more displays (106), the one or more electromechanical actuators (112), one or more light sources (116), one or more speakers (110), the network component (114) and one or more programs or functions stored on the one or more storage media (102).

14. The toy (100; 220) of claim 12, wherein the result is additionally signaled to the user (210) by at least one of:
one or more displays (106) configured to display an indication of the result;
one or more speakers (110) configured to emit soundwaves corresponding to an indication of the result; and
one or more light sources (116) configured to signal an indication of the result.

15. The toy (100; 220) of one of claims 12 and 14, wherein the toy (100; 220) simultaneously operates in the first mode (201) and the second mode (202); or
wherein the toy (100; 220) sequentially operates in the first mode (201) and the second mode (202).
